(19) Europäisches Patentamt
European Patent Office
Office européen des brevets

(11) **EP 4 644 508 A1**

(12) **EUROPEAN PATENT APPLICATION**
published in accordance with Art. 153(4) EPC

(43) Date of publication:
**05.11.2025 Bulletin 2025/45**

(21) Application number: 23911834.2

(22) Date of filing: **18.12.2023**

(51) International Patent Classification (IPC):
*C09K 3/10* (2006.01)   *B32B 5/18* (2006.01)
*B32B 27/00* (2006.01)   *C09J 7/38* (2018.01)
*C09J 11/04* (2006.01)   *C09J 201/00* (2006.01)

(52) Cooperative Patent Classification (CPC):
**B32B 5/18; B32B 27/00; C09J 7/38; C09J 11/04; C09J 201/00; C09K 3/10**

(86) International application number:
**PCT/JP2023/045385**

(87) International publication number:
**WO 2024/143054 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211982**
**02.06.2023 JP 2023091801**

(71) Applicant: NITTO DENKO CORPORATION
Ibaraki-shi
Osaka 567-8680 (JP)

(72) Inventors:
• **KAMAYA Yusuke**
**Ibaraki-shi, Osaka 567-8680 (JP)**
• **UKEI Hiroichi**
**Ibaraki-shi, Osaka 567-8680 (JP)**
• **SUZUKI Hideyuki**
**Ibaraki-shi, Osaka 567-8680 (JP)**
• **IWASE Takayuki**
**Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **SEAL MATERIAL**

(57)    A sealing member 1a has a thickness t of 1 to 40 mm. The sealing member 1a has surface portions 10e. The surface portion 10e each includes a surface 11 in a thickness direction of the sealing member 1a, and the surface portion 10e has a thickness of 300 $\mu$m. The surface portion 10e has a breaking strain of 500%. In addition, the surface portion 10e satisfies a requirement: tensile force $F_A$ [N/20 mm] > adhesive force $F_B$ [N/20 mm]. The tensile force $F_A$ is expressed as $F_1 \cdot t_A \cdot 20/S_1$. The adhesive force $F_B$ is a 90° peel adhesion [N/20 mm], which is measurable by maintaining an environmental temperature of a test piece at 100°C for 7 days while the test piece prepared from the sealing member being adhered to a test plate, and by conducting a measurement by peeling the test piece from the test plate in accordance with Japanese Industrial Standards (JIS) Z 0237:2022.

FIG.1

EP 4 644 508 A1

## Description

TECHNICAL FIELD

The present invention relates to a sealing member.

BACKGROUND ART

Sealing members that can fill gaps to exhibit watertight performance have been conventionally known.

For example, Patent Literature 1 describes a watertight sealing member in which a layer of a given pressure-sensitive adhesive composition is on at least one face of a foamed structure having closed cells. The layer contains a polymer having a given polycarbonate structure. Since this watertight sealing member has no tack, the watertight sealing member does not immediately adhere. After the watertight sealing member is attached, the watertight sealing member gradually adheres to an adherend due to the repulsive force of the foamed structure, thereby enhancing the sealing performance between the foamed structure surface and the adherend interface. A watertight test is conducted with a sample of the watertight sealing member sandwiched between two acrylic plates.

In the meantime, a pressure-sensitive adhesive sheet is known, the pressure-sensitive adhesive sheet designed to be peeled off after being adhered to an adherend. For example, Patent Literature 2 describes a pressure-sensitive adhesive strip being detachable without residues or damage, due to extensional stretching substantially on an adhesive face. This pressure-sensitive adhesive strip includes at least one adhesive layer foamed with microballoons and at least one carrier B. The pressure-sensitive adhesive A for forming the adhesive layer includes an elastomer portion (a1) containing at least one polyvinyl aromatic-polydiene-block copolymer as a base and a given adhesive resin portion (a2). The pressure-sensitive adhesive A optionally includes a softening resin portion (a3).

Patent Literature 3 describes an adhesive mounting assembly that is capable of attaching or adhering to a surface and that can be peeled from the surface without causing damage to the surface. This adhesive mounting assembly includes a backing, a first adhesive area, a second adhesive area, a non-adhesive area, and a mounting device. The first adhesive area and the second adhesive area are areas on the first major surface of the backing. The non-adhesive area is, for example, arranged between the first adhesive area and the second adhesive area. The mounting device is adjacent to the backing. The non-adhesive area is, for example, adjacent to the mounting device.

CITATION LIST

Patent Literature

> Patent Literature 1: JP H10-77463 A
> Patent Literature 2: JP 2018-138649
> Patent Literature 3: JP 2019-534059

SUMMARY OF INVENTION

Technical Problem

In Patent Literature 1, it is not envisioned that a watertight sealing member is peeled after adhering the watertight sealing member sufficiently to an adherend and achieving a high sealing performance between a foamed structure surface and the adherend interface. Furthermore, in Patent Literature 1, it is not envisioned that the watertight sealing member adhered to the adherend is exposed to a high-temperature environment for a long period of time. In Patent Literatures 2 and 3, it is not envisioned that the sealing member is exposed to a high-temperature environment for a long period of time after being applied to the adherend. These techniques need to be reconsidered in terms of peeling of the sealing member after an exposure to a high-temperature environment for a long period of time.

Therefore, the present invention provides a sealing member that is advantageous from the viewpoint of peeling from an adherend after being adhered to the adherend and exposed to a high-temperature environment for a long period of time.

Solution to Problem

The present invention provides a sealing member,

the sealing member having a thickness of 1 mm to 40 mm,

the sealing member including a surface portion having a thickness of 300 $\mu$m, the surface portion including a surface in a thickness direction of the sealing member, wherein

the surface portion has a breaking strain of 500% or more and satisfies the following requirement: tensile force $F_A$ [N/20 mm] > adhesive force $F_B$ [N/20 mm],

the tensile force $F_A$ is expressed as $F_1 \cdot t_A \cdot 20/S_1$, where $F_1$ [N] is a maximum test force in a tensile test conducted on a test piece prepared from the surface portion, $S_1$ [mm$^2$] is a cross-sectional area of the test piece, and $t_A$ [mm] is a thickness of the surface portion,

the test piece in the tensile test has a rectangular shape having a width of 10 mm and a length of 40 mm in a plan view,

a chuck-to-chuck distance in the tensile test is 10 mm,

a test speed in the tensile test is 1000 mm/min, and

the adhesive force $F_B$ is a 90° peel adhesion [N/20 mm], which is obtainable by maintaining an environmental temperature at 100°C for 7 days for a test piece prepared from the sealing member while the test piece being adhered to a test plate, and by conducting a measurement by peeling the test piece from the test plate in accordance with Japanese Industrial Standards (JIS) Z 0237:2022.

Advantageous Effects of Invention

The above-mentioned sealing member is advantageous in terms of peeling from an adherend after being adhered to the adherend and exposed to a high-temperature environment for a long period of time.

BRIEF DESCRIPTION OF DRAWINGS

FIG. 1 is a cross-sectional view schematically showing an example of a sealing member according to the present invention.
FIG. 2 is a cross-sectional view schematically showing an example of use of the sealing member.
FIG. 3A is a side view showing an example of a method for peeling a sealing member.
FIG. 3B is a plan view showing an example of a method for peeling a sealing member.
FIG. 4A is a graph expressing a tensile force F [N/20 mm] as a function of strain in a tensile test.
FIG. 4B is a graph expressing a tensile force F [N/20 mm] as a function of strain in a tensile test.
FIG. 5 is a cross-sectional view schematically showing another example of a sealing member.

DESCRIPTION OF EMBODIMENTS

Embodiments of the present invention will be described with reference to the drawings. The present invention is not limited to the following embodiments.

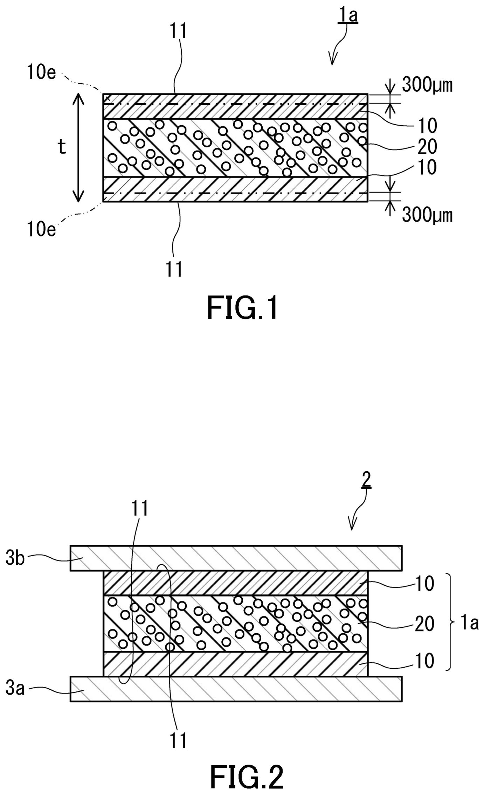

As shown in FIG. 1, a sealing member 1a has a thickness t of 1 mm to 40 mm. The sealing member 1a has surface portions 10e. The surface portions 10e each include a surface 11 in the thickness direction of the sealing member 1a and has a thickness of 300 $\mu$m. In other words, a region within 300 $\mu$m from the surface 11 in the thickness direction of the sealing member 1a is defined as the surface portion 10e. The surface portion 10e has a breaking strain of 500%. In addition, the surface portion 10e satisfies a requirement: tensile force $F_A$ [N/20 mm] > adhesive force $F_B$ [N/20 mm]. The tensile force $F_A$ is expressed as $F_1 \cdot t_A \cdot 20/S_1$, where $F_1$ [N] is a maximum test force in a tensile test conducted on a test piece prepared from the surface portion 10e, $S_1$ [mm$^2$] is a cross-sectional area of the test piece, and $t_A$ [mm] is a thickness of the surface portion 10e. The test piece in the tensile test has a rectangular shape having a width of 10 mm and a length of 40 mm in a plan view. A chuck-to-chuck distance in the tensile test is 10 mm. A test speed in the tensile test is 1000 mm/min. The tensile test is conducted in accordance with Japanese Industrial Standards (JIS) K6251, except where otherwise specified. The adhesive force $F_B$ is a 90° peel adhesion [N/20 mm], which is obtainable by maintaining an environmental temperature at 100°C for 7 days for the test piece prepared from the sealing member 1a while the test piece being adhered to a test plate, and by conducting a measurement by peeling the test piece from the test plate in accordance with Japanese Industrial Standards (JIS) Z 0237:2022.

As shown in FIG. 2, a sealing structure 2 can be provided using the sealing member 1a. For example, the sealing structure 2 is obtained by pressure-bonding the sealing member 1a between an adherend 3a and an adherend 3b. The sealing structure 2 can exhibit waterproof performance compliant with IPX7, for example. The sealing structure 2 can be exposed to high temperatures (e.g., 100°C or higher) for a long period of time (e.g., 168 hours or longer). In addition, the sealing member 1a can be peeled from the adherend 3a and the adherend 3b and collected after use of the sealing structure 2. This promotes recycling of the adherend 3a and the adherend 3b, which is desirable from a viewpoint of environmental protection.

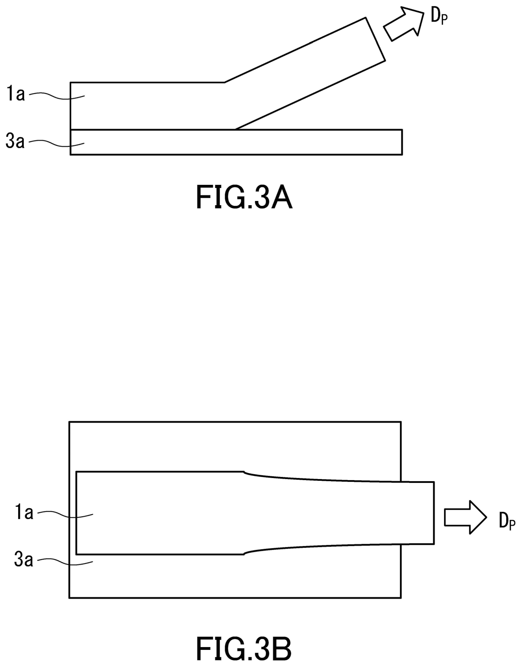

For example, in the case of peeling the sealing member 1a from the adherend 3a, as shown in FIG. 3A and FIG. 3B, the sealing member 1a is pulled in a direction $D_P$. In this case, an acute angle formed by the sealing member 1a with the surface of the adherend 3a is, for example, 5° to 70°, where the sealing member 1a extends in the direction $D_P$.

Based on investigations by the inventors, filling a gap between the adherends by use of a double-sided adhesive tape is complicated and may be impractical when the gap between the adherends is large. Therefore, it is considered that the gap between the adherends can be filled with a sealing member having a thickness of 1 to 40 mm. In this case, for example, in order for the sealing member to exhibit watertight performance, it is necessary that the surface of the sealing member in the thickness direction be in a watertight state with respect to the adherend face. Therefore, it is considered advantageous for the watertight performance to be exhibited that the adhesive force of the surface of the sealing member in the thickness direction to the adherend is large. On the other hand, as shown in FIG. 3A and FIG. 3B, it may be necessary to peel the sealing member from the adherend for recycling purposes. In this case, it is important that the sealing member does not break during the peeling and that no part of the sealing member remains on the adherend. However, when the sealing member is exposed to a high-temperature environment for a long period of time while being adhered to the adherend, the sealing member may become prone to breaking during peeling, making the collection process troublesome. Another concern is that a part of the sealing member 1a is likely to remain on the adherend, and the remaining pressure-sensitive adhesive or the like may hinder recycling of the adherend.

The sealing member 1a having a thickness of 1 mm to 40 mm can easily fill a gap between adherends even when the gap is large. The surface portion 10e of the sealing member 1a has a breaking strain of 500% or more, as described above, and satisfies the requirement: tensile force $F_A$ [N/20 mm] > adhesive force $F_B$ [N/20 mm]. As a result, even when the sealing member 1a is exposed to a high-temperature environment for a long period of time while being adhered to the adherend and then peeled from the adherend, the sealing member 1a is less likely to break, and a part of the sealing member 1a is unlikely to remain on the adherend. This makes it easier to collect the sealing member 1a.

Since the sealing member 1a has a breaking strain of 500% or more, as shown in FIG. 3B, a neck is likely to be formed when the sealing member 1a is peeled. Formation of the neck reduces the adhesive area between the adherend and the sealing member 1a, allowing the sealing member 1a to be peeled in a state where a part of the sealing member 1a is less likely to remain on the adherend.

In the sealing member 1a, for example, both surface portions 10e in the thickness direction of the sealing member 1a have a breaking strain of 500% or more, and the requirement: tensile force $F_A$ [N/20 mm] > adhesive force $F_B$ [N/20 mm] is satisfied. In the sealing member 1a, only one of the two surface portions 10e in the thickness direction of the sealing member 1a may have a breaking strain of 500% or more, and the requirement: tensile force $F_A$ [N/20 mm] > adhesive force $F_B$ [N/20 mm] may be satisfied. Whether the surface portion 10e satisfies the requirement: tensile force $F_A$ [N/20 mm] > adhesive force $F_B$ [N/20 mm] is determined by a measurement of the adhesive force $F_B$, where the measurement is conducted by adhering a test piece to a test plate such that the surface portion 10e is in contact with the test plate.

The thickness t of the sealing member 1a may be 2 mm or more, may be 3 mm or more, or may be 5 mm or more. The thickness t may be 35 mm or less, may be 30 mm or less, may be 25 mm or less, or may be 20 mm or less.

The breaking strain of the surface portion 10e may be 600% or more, 700% or more, 800% or more, 900% or more, 1000% or more, 1100% or more, 1200% or more, 1300% or more, 1400% or more, 1500% or more, 1600% or more, 1800% or more, 1900% or more, or 2000% or more.

The breaking strain of the surface portion 10e is, for example, 5000% or less. This makes it easier to prevent the amount of strain of the sealing member 1a from increasing excessively when the sealing member 1a is peeled from the adherend after being exposed to a high-temperature environment for a long period of time while being adhered to the adherend. The breaking strain of the surface portion 10e may be 4900% or less, 4800% or less, 4700% or less, 4600% or less, 4500% or less, 4400% or less, 4300% or less, 4200% or less, 4100% or less, or 4000% or less.

The tensile force $F_A$ [N/20 mm] is not limited to a specific value as long as the requirement: tensile force $F_A$ [N/20 mm] > adhesive force $F_B$ [N/20 mm] is satisfied. The tensile force $F_A$ [N/20 mm] may be, for example, not less than 10 N/20 mm, not less than 20 N/20 mm, not less than 25 N/20 mm, or not less than 30 N/20 mm. The tensile force $F_A$ [N/20 mm] may be, for example, not more than 100 N/20 mm, not more than 90 N/20 mm, or not more than 80 N/20 mm.

The adhesive force $F_B$ [N/20 mm] is not limited to a specific value as long as the requirement: tensile force $F_A$ [N/20 mm] > adhesive force $F_B$ [N/20 mm] is satisfied. The adhesive force $F_B$ [N/20 mm] is, for example, not less than 5 N/20 mm, and may be not less than 10 N/20 mm, not less than 12 N/20 mm, or not less than 15 N/20 mm. The adhesive force $F_B$ [N/20 mm] is, for example, not more than 80 N/20 mm, and may be not more than 75 N/20 mm, or not more than 70 N/20 mm.

A difference obtained by subtracting the adhesive force $F_B$ [N/20 mm] from the tensile force $F_A$ [N/20 mm] is not limited to a specific value as long as the requirement: tensile force $F_A$ [N/20 mm] > adhesive force $F_B$ [N/20 mm] is satisfied. The difference $F_A - F_B$ is, for example, not less than 0.5 [N/20 mm], and may be not less than 1.0 [N/20 mm], or not less than 1.5 [N/20 mm].

The difference $F_A - F_B$ may be, for example, not more than 60 [N/20 mm], not more than 55 [N/20 mm], not more than 50 [N/20 mm], or not more than 45 [N/20 mm].

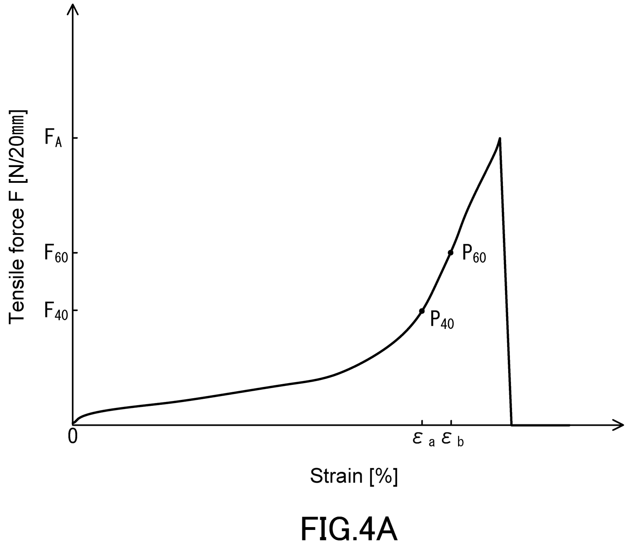

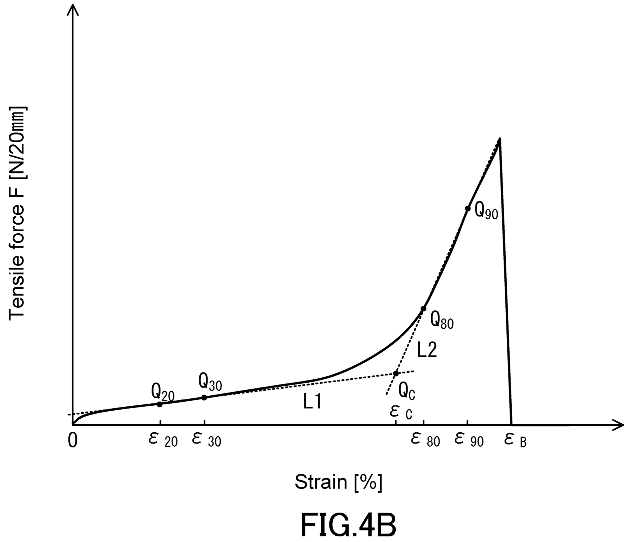

FIG. 4A and FIG. 4B are graphs expressing the tensile force F [N/20 mm] as a function of strain in a tensile test conducted on a test piece prepared from the surface portion 10e. The tensile force F is expressed as $F_2 \cdot t_A \cdot 20/S_1$, where $F_2$ is the tensile force F [N] in the tensile test, $S_1$ [mm$^2$] is the cross-sectional area of the test piece, and $t_A$ [mm] is the thickness of the surface portion 10e.

The surface portion 10e has, for example, an average change rate $R_{AV}$ of not less than 1.5 [N/20 mm] in the tensile test. As a result, the requirement: tensile force $F_A$ [N/20 mm] > adhesive force $F_B$ [N/20 mm] may easily be satisfied in the desired state. Therefore, even when the sealing member 1a is exposed to a high-temperature environment for a long period of time after being adhered to the adherend, the sealing member 1a is less likely to break when peeled from the adherend.

The average change rate $R_{AV}$ is a ratio of an amount of change in a tensile force F [N/20 mm] to an amount of change in a strain in a range of a test force ratio being from 40% to 60% in the tensile test conducted on a test piece prepared from the surface portion 10e. In this case, the strain is not the value obtained by expressing as a percentage, but a value obtained by expressing the ratio of the deformation of the test piece to its original length, the original length being set as 1. In FIG. 4A, a tensile force $F_{40}$ is the tensile force F corresponding to a test force ratio of 40%, and a tensile force $F_{60}$ is the tensile force F corresponding to a test force ratio of 60%. In FIG. 4A, points $P_{40}$ and $P_{60}$ correspond to tensile forces $F_{40}$ and $F_{60}$, respectively, in a graph expressing the tensile force F [N/20 mm] as a function of strain. The strains corresponding to the points $P_{40}$ and $P_{60}$ are denoted as $\varepsilon_a$ [%] and $\varepsilon_b$ [%], respectively. The average change rate $R_{AV}$ is expressed by the following Equation (1).

$$R_{AV} = (F_{60} - F_{40}) / (\varepsilon_b - \varepsilon_a) \qquad \text{Equation (1)}$$

The average change rate $R_{AV}$ may be not less than 1.6 [N/20 mm], not less than 1.7 [N/20 mm], or not less than 1.8 [N/20 mm]. The average change rate $R_{AV}$ may be, for example, not more than 15 [N/20 mm], not more than 14 [N/20 mm], not more than 13 [N/20 mm], not more than 12 [N/20 mm], not more than 10 [N/20 mm], or not more than 5 [N/20 mm]. The average change rate $R_{AV}$ may be less than 1.5 [N/20 mm].

The surface portion 10e has a specific strain $\varepsilon_C$ of, for example, 2500% or less in a tensile test. As shown in FIG. 4B, the specific strain $\varepsilon_C$ is a strain corresponding to an intersection point Qc of a first straight line L1 and a second straight line L2 in a graph expressing a tensile force F [N/20 mm] as a function of strain. The first straight line L1 is a straight line passing through a pair of points $Q_{20}$ and $Q_{30}$ in the above graph, where the strain ratio is 20% and 30%, respectively. The strain ratio is the ratio of the strain of the test piece to the breaking strain $\varepsilon_B$ in the tensile test. In FIG. 4B, $\varepsilon_{20}$ and $\varepsilon_{30}$ are the strains corresponding to strain ratios of 20% and 30%, respectively. The second straight line L2 is a straight line passing through the pair of points $Q_{80}$ and $Q_{90}$ in the above graph, where the strain ratios are 80% and 90%, respectively. In FIG. 4B, $\varepsilon_{80}$ and $\varepsilon_{90}$ are the strains corresponding to strain ratios of 80% and 90%, respectively.

The specific strain $\varepsilon_C$ may be 2400% or less, 2300% or less, 2200% or less, 2100% or less, 2000% or less, 1900% or less, or 1800% or less. The specific strain $\varepsilon_C$ is desirably 1800% or less. In this case, the requirement: tensile force $F_A$ [N/20 mm] > adhesive force $F_B$ [N/20 mm] is easily satisfied in the desired state. Therefore, even when the sealing member 1a is peeled from the adherend after being exposed to a high-temperature environment for a long period of time while being adhered to the adherend, the sealing member 1a is less likely to break.

The specific strain $\varepsilon_C$ is, for example, 300% or more, or it may be 400% or more, 500% or more, 600% or more, 700% or more, 800% or more, 900% or more, 1000% or more, 1100% or more, or 1200% or more.

As shown in FIG. 4B, for example, the slope of the second straight line L2 is greater than the slope of the first straight line L1. The slope of the first straight line L1 is, for example, 0.1 to 1 [N/20 mm]. The slope of the second straight line L2 is, for example, 2 to 8 [N/20 mm].

The tensile elasticity of the material forming the surface 11 of the sealing member 1a is not limited to a specific value. The tensile elasticity is, for example, less than 6.5 MPa. In a sealing structure including the sealing member 1a, the interface between the surface 11 and the adhered face is likely to be watertight. The tensile elasticity of the material forming the surface 11 is desirably 6.0 MPa or less, and more desirably 5.5 MPa or less.

As shown in FIG. 1, the sealing member 1a includes, for example, at least two layers. This allows the gap between the adherends to be easily filled by the sealing member 1a even when the gap is large.

As shown in FIG. 1, the sealing member 1a includes, for example, a foam 20. This allows the sealing member 1a to easily fill the gap between the adherends even when the gap is large. Furthermore, the sealing member 1a is less likely to break even if the sealing member 1a is exposed to a high-temperature environment for a long period of time while being adhered to the adherend and then peeled from the adherend. In addition, since the foam 20 can compress and deform in accordance with the gap, a sealing structure that exhibits watertight performance by use of the sealing member 1a can be easily obtained.

The structure of the foam 20 is not limited to a particular structure. For example, the foam 20 has a closed-cell structure. In this case, the sealing member 1a is less likely to break even if the sealing member 1a is exposed to a high-temperature environment for a long period of time while being adhered to the adherend and then peeled from the adherend. In addition, the internal liquid tightness of the foam 20 is high, whereby the sealing structure 2 is likely to exhibit the desired watertight performance.

For example, the foam 20 may have a semi-open and semi-closed cell structure. In this case, the foam 20 includes open cells before compressive deformation, and, for example, when the foam 20 undergoes compressive deformation with a compressive strain of 50% or more, the structure of the foam 20 changes to a structure similar to a closed-cell structure due to blockage of the open-cell portions. The foam 20 may, for example, have an open-cell structure.

The material of the foam 20 is not limited to a particular material. The foam 20 is, for example, a rubber foam or a resin foam. Examples of resin foam include urethane foam, silicone foam, and acrylic foam.

The foam 20 is, desirably, a rubber foam. In this case, even when the compressive strain of the foam 20 in the sealing structure 2 is small, the sealing structure 2 is likely to exhibit high watertight performance. The rubber foam is obtained by foaming a rubber composition containing, for example, rubber, a foaming agent, and a cross-linking agent.

The rubber may be, for example, an olefin-based elastomer, a styrene-based elastomer, a butyl-based elastomer, a vinyl chloride-based elastomer, or natural rubber. Examples of olefin-based elastomers include ethylene-propylene rubber (EPM) and ethylene-propylene-diene rubber (EPDM). Examples of styrene-based elastomers include styrene-butadiene rubber (SBR), styrene-butadiene-styrene rubber (SBS), styrene-isoprene-styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of butyl-based elastomers include butyl rubber, polyisobutylene rubber, polybutene, polyisoprene rubber, and nitrile butadiene rubber (NBR). Examples of vinyl chloride-based elastomers include chloroprene rubber and chlorosulfonated polyethylene rubber.

The rubber is desirably an olefin-based elastomer, and more desirably EPDM. In this case, even when the compressive strain of the foam 20 in the sealing structure 2 is small, the sealing structure 2 is more likely to exhibit high watertight performance.

The EPDM is a rubber obtained by the copolymerization of ethylene, propylene, and a diene. By copolymerizing ethylene and propylene with a diene, it is possible to introduce an unsaturated bond, enabling cross-linking with a cross-linking agent.

Examples of the diene include 5-ethylidene-2-norbornene, 1,4-hexadiene, and dicyclopentadiene. These dienes may be used alone, or a combination of two or more of these dienes may be used. In the case where the diene includes dicyclopentadiene, the degree of cross-linking can be improved.

The EPDM desirably has long-chain branching. A method for introducing a long branched chain into the EPDM is not limited to a particular method, and a known method is employed. In the case where the EPDM has long-chain branching, the rubber composition can be foamed well.

The content of the diene in the EPDM (diene content) is, for example, 1 mass% or more, desirably 2 mass% or more, and more desirably 3 mass% or more. The diene content is, for example, 20 mass% or less, and desirably 15 mass% or less. In this case, the rubber foam is less susceptible to the occurrence of surface shrinkage, and the rubber foam is less susceptible to the occurrence of a crack.

The foaming agent may be an organic foaming agent or an inorganic foaming agent.

Examples of the organic foaming agent include an azo-based foaming agent, an N-nitroso-based foaming agent, a hydrazide-based foaming agent, a semicarbazide-based foaming agent, a fluorinated alkane-based foaming agent, a triazole-based foaming agent, and other known organic foaming agents. Examples of azo-based foaming agents include azodicarbonamide (ADCA), barium azodicarboxylate, azobisisobutyronitrile (AIBN), azocyclohexylnitrile, and azodiaminobenzene. Examples of N-nitroso-based foaming agents include N,N'-dinitrosopentamethylenetetramine (DTP), N,N'-dimethyl-N,N'-dinitrosoterephthalamide, and trinitrosotrimethyltriamine. Examples of hydrazide-based foaming agents include 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide). Examples of semicarbazide-based foaming agents include p-toluenesulfonylsemicarbazide and 4,4'-oxybis(benzenesulfonylsemicarbazide). Examples of fluorinated alkane-based foaming agents include trichloromonofluoromethane and dichloromonofluoromethane. Examples of triazole-based foaming agents include 5-morpholyl-1,2,3,4-thiatriazole. The organic foaming agent may be a thermally expandable microparticle in which a thermally expandable substance is encapsulated in a microcapsule. Such a thermally expandable microparticle is, for example, a commercially available product such as Microsphere (product name, manufactured by Matsumoto Yushi-Seiyaku Co., Ltd.).

Examples of the inorganic foaming agent include a hydrogen carbonate, a carbonate, a nitrite, a borohydride, an inorganic azide, and other known inorganic foaming agents. Examples of hydrogen carbonates include sodium hydrogen carbonate and ammonium hydrogen carbonate. Examples of carbonates include sodium carbonate and ammonium carbonate. Examples of nitrites include sodium nitrite and ammonium nitrite. Examples of borohydrides include sodium borohydride. These foaming agents may be used alone, or a combination of two or more of these foaming agents may be used.

The mixing amount of the foaming agent is, for example, 0.1 parts by mass or more, desirably 1 part by mass or more, and more desirably 10 parts by mass or more, relative to 100 parts by mass of the rubber. The mixing amount of the foaming agent is, for example, 50 parts by mass or less, and desirably 30 parts by mass or less.

Examples of the cross-linking agent include sulfur (S8) and a sulfur compound, such as 4,4'-dithiodimorpholine, selenium, magnesium oxide, lead monoxide, a quinoid compound, such as p-quinone dioxime, p,p'-dibenzoylquinone dioxime, or poly-p-dinitrosobenzene, a polyamine, a nitroso compound, such as p-dinitrosobenzene, an organic peroxide, a resin, and an ammonium salt, such as ammonium benzoate. Examples of organic peroxides include dicumyl peroxide, dimethyldi(t-butylperoxy)hexane, 1,1-di(t-butylperoxy)cyclohexane, and α,α'-di(t-butylperoxy)diisopropylbenzene. Examples of resins include alkylphenol-formaldehyde resins and melamine-formaldehyde condensates. These cross-linking agents may be used alone, or a combination of two or more of these cross-linking agents may be used.

The cross-linking agent is desirably sulfur (S8) and a sulfur compound, a quinoid compound, or an organic peroxide. Sulfur (S8) and sulfur compounds are advantageous in terms of achieving excellent mechanical strength and excellent foaming properties. Quinoid compounds are advantageous in terms of reducing the sulfur atom content, reducing corrosive properties, and achieving excellent foaming properties. Organic peroxides are advantageous in terms of improving adhesion, conformability to surface irregularities or the like, with respect to the object for achieving a sealing structure.

The mixing proportion of the cross-linking agent is, for example, 0.05 parts by mass or more, desirably 0.5 parts by mass or more, and more desirably 1 part by mass or more, relative to 100 parts by mass of the rubber. The mixing proportion of the cross-linking agent is, for example, 30 parts by mass or less, desirably 20 parts by mass or less, and more desirably 10 parts by mass or less, relative to 100 parts by mass of the rubber.

The cross-linking agent may be a combination of a quinoid compound and an organic peroxide. In this case, sufficient cross-linking on the surface of the foam 20 is likely to occur. In the case where the combination of a quinoid compound and an organic peroxide is used, the mixing proportion of the organic peroxide is, for example, 1 part by mass or more, and more desirably 10 parts by mass or more, relative to 100 parts by mass of the quinoid compound. The mixing proportion is, for example, 100 parts by mass or less, and desirably 50 parts by mass or less, relative to 100 parts by mass of the quinoid compound.

The rubber composition desirably contains a foaming aid and a cross-linking aid. Examples of the foaming aid include a urea-based foaming aid, a salicylic acid-based foaming aid, a benzoic acid-based foaming aid, and a metal oxide, such as zinc oxide. Preferred examples of the foaming aid include a urea-based foaming aid and a metal oxide. These foaming aids may be used alone, or a combination of two or more of these foaming aids may be used.

The mixing proportion of the foaming aid is, for example, 0.5 parts by mass or more, and desirably 1 part by mass or more, relative to 100 parts by mass of the rubber. The mixing proportion is, for example, 20 parts by mass or less, and more desirably 10 parts by mass or less, relative to 100 parts by mass of the rubber.

Examples of the cross-linking aid include a thiazole, a thiourea, a dithiocarbamate, a guanidine, a sulfenamide, a thiuram, a xanthate, an aldehyde ammonia, and an aldehyde amine. Among these, a thiazole, a thiourea, a dithiocarbamate, or a thiuram is desirably used as the cross-linking aid. Examples of thiazoles include dibenzothiazyl disulfide and 2-mercaptobenzothiazole. Examples of thioureas include diethylthiourea, trimethylthiourea, and dibutylthiourea. Examples of dithiocarbamates include sodium dimethyldithiocarbamate, sodium diethyldithiocarbamate, zinc dimethyldithiocarbamate, zinc diethyldithiocarbamate, and zinc dibenzyl dithiocarbamate. Examples of guanidines include diphenylguanidine and di-o-tolylguanidine. Examples of sulfenamides include benzothiazyl-2-diethylsulfenamide and N-cyclohexyl-2-benzothiazylsulfenamide. Examples of thiurams include tetramethylthiuram monosulfide, tetramethylthiuram disulfide, and tetrabenzylthiuram disulfide. Examples of xanthates include sodium isopropyl xanthate and zinc isopropyl xanthate. Examples of aldehyde ammonias include acetaldehyde ammonia and hexamethylenetetramine. Examples of aldehyde amines include n-butylaldehyde aniline and butyraldehyde monobutylamine.

The cross-linking aid may be an alcohol. Examples of alcohols include monohydric alcohols, such as ethanol, dihydric alcohols, such as ethylene glycol, trihydric alcohols, such as glycerin, and polyols (polyoxyethylene glycols), such as polyethylene glycol and polypropylene glycol. Desirably, a polyol is used as the alcohol. In this case, the number average molecular weight of the polyol is, for example, 200 or more, and desirably 300 or more. The number average molecular weight of the polyol is, for example, 10000 or less, and desirably 5000 or less.

These cross-linking aids may be used alone, or a combination of two or more of these cross-linking aids may be used.

In the case where sulfur and a sulfur compound are used as the cross-linking agent, a thiazole, a thiourea, a dithiocarbamate, or a thiuram is desirably used as the cross-linking aid in terms of ensuring good foam shape and good flexibility of the foam 20.

In the case where a quinoid compound is used as the cross-linking agent, an alcohol is desirably used as the cross-linking aid and a polyol is more desirably used as the cross-linking aid, in terms of reducing corrosive properties. In particular, in the case where a derivative of p-quinone dioxime is used as the quinoid compound, the use of polyethylene glycol is advantageous. In the case where polyethylene glycol is used as the polyol, the rubber composition can be cross-linked well, making excellent foaming properties likely to be ensured.

The mixing proportion of the cross-linking aid is, for example, 0.01 parts by mass or more, desirably 0.02 parts by mass or more, and more desirably 0.06 parts by mass or more, relative to 100 parts by mass of the rubber. The mixing proportion is, for example, 20 parts by mass or less, desirably 10 parts by mass or less, and more desirably 5 parts by mass or less, relative to 100 parts by mass of the rubber.

The rubber composition may contain an additive such as a lubricant (processing aid), a pigment, a filler, a flame retardant, or a softener, as needed.

Examples of the lubricant include stearic acids, esters thereof, stearate compounds, such as zinc stearate, and paraffin. These lubricants may be used alone, or a combination of two or more of these lubricants may be used. The mixing proportion of the lubricant is, for example, 0.1 parts by mass or more, and desirably 1 part by mass or more, relative to 100 parts by mass of the rubber. The mixing proportion is, for example, 20 parts by mass or less, and more desirably 10 parts by mass or less, relative to 100 parts by mass of the rubber.

An example of the pigment is carbon black. Pigments may be used alone, or a combination of two or more pigments may be used. The mixing proportion of the pigment is, for example, 1 part by mass or more, and desirably 2 parts by mass or more, relative to 100 parts by mass of the rubber. The mixing proportion is, for example, 50 parts by mass or less, and desirably 30 parts by mass or less, relative to 100 parts by mass of the rubber.

The filler may be an inorganic filler, an organic filler, or any other known filler. Examples of the inorganic filler include calcium carbonate, magnesium carbonate, silicic acids and salts thereof, clay, talc, mica powder, bentonite, silica, alumina, aluminum silicate, and aluminum powder. An example of the organic filler is cork. These fillers may be used alone, or a combination of two or more of these fillers may be used. The mixing proportion of the filler is, for example, 10 parts by mass or more, desirably 30 parts by mass or more, and more desirably 50 parts by mass or more, relative to 100 parts by mass of the rubber. The mixing proportion is, for example, 300 parts by mass or less, and desirably 200 parts by mass or less, relative to 100 parts by mass of the rubber.

Examples of the flame retardant include hydroxides, such as calcium hydroxide, magnesium hydroxide, and aluminum hydroxide. These flame retardants may be used alone, or a combination of two or more of these flame retardants may be used. The mixing proportion of the flame retardant is, for example, 5 parts by mass or more, desirably 10 parts by mass or more, and more desirably 15 parts by mass or more, relative to 100 parts by mass of the rubber. The mixing proportion is, for example, 200 parts by mass or less, desirably 150 parts by mass or less, and more desirably 100 parts by mass or less, relative to 100 parts by mass of the rubber.

Examples of the softener include petroleum-based oils, asphalt, low-molecular-weight polymers, organic acid esters, and tackifiers. Examples of petroleum-based oils include paraffinic process oils, such as paraffin oil, naphthenic process oils, drying oils or animal and vegetable oils, and aromatic process oils. An example of drying oils or animal and vegetable oils is flaxseed oil. Examples of organic acid esters include phthalates, such as di-2-ethylhexyl phthalate (DOP) and dibutyl phthalate (DBP), phosphate esters, higher fatty acid esters, and alkyl sulfonate esters. The softener used is desirably a petroleum-based oil or asphalt, more desirably a paraffinic process oil. These softeners may be used alone, or a combination of two or more of these softeners may be used. The mixing proportion of the softener is, for example, 5 parts by mass or more, and desirably 10 parts by mass or more, relative to 100 parts by mass of the rubber. The mixing proportion is, for example, 300 parts by mass or less, and more desirably 200 parts by mass or less, relative to 100 parts by mass of the rubber.

The rubber composition may contain a known additive such as a plasticizer, an anti-aging agent, an antioxidant, a colorant, an anti-fungal agent, or a non-rubber polymer, depending on its purpose and application.

In the sealing member 1a, the surface portion 10e may include a filler, or does not need to include a filler. In the case where the surface portion 10e includes a filler, the tack of the sealing member 1a can be easily adjusted to a desired range. The material of the filler is not limited to a particular material. The filler contains, for example, an inorganic substance. Examples of the inorganic substance include calcium carbonate, magnesium carbonate, clay, talc, mica, bentonite, silica, alumina, aluminum silicate, and aluminum.

As shown in FIG. 1, the sealing member 1a further includes, for example, an adhesive layer 10. The adhesive layer 10 is, for example, a pressure-sensitive adhesive layer. The adhesive layer 10 contains, for example, a rubber-based polymer. The rubber-based polymer is, for example, a synthetic rubber, such as a thermoplastic elastomer or a thermosetting elastomer.

Examples of thermoplastic elastomers include olefin-based elastomers, styrene-based elastomers, butyl-based elastomers, and vinyl chloride-based elastomers. Examples of olefin-based elastomers include ethylene-propylene rubber (EPM) and ethylene-propylene-diene rubber (EPDM). Examples of styrene-based elastomers include styrene-butadiene rubber (SBR), styrene-butadiene-styrene rubber (SBS), styrene-isoprene styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of butyl-based elastomers include butyl rubber, polyisobutylene rubber, polybutene, polyisoprene rubber, and nitrile butadiene rubber (NBR). Examples of vinyl chloride-based elastomers include chloroprene rubber and chlorosulfonated polyethylene rubber.

Examples of thermosetting elastomers include silicone rubber, fluorine rubber, acrylic rubber, and polyamide rubber.

The rubber-based polymer is desirably a thermoplastic elastomer, and more desirably a styrene-based elastomer or a butyl-based elastomer.

The weight average molecular weight of the rubber-based polymer is, for example, 30,000 or more, desirably 50,000 or more, and more desirably 100,000 or more. The weight average molecular weight of the rubber-based polymer is, for example, 5,000,000 or less, desirably 3,000,000 or less, and more desirably 1,000,000 or less. In this case, the face formed from the adhesive layer 10 is likely to have a desired adhesion. The weight average molecular weight is measured by gel permeation chromatography, expressed in terms of polystyrene equivalents.

In the case where the surface portion 10e contains a filler, the content of the filler in the adhesive layer 10 is not limited to a particular value. For example, in the adhesive layer 10, the content of the filler is, for example, 5 parts by mass or more, desirably 10 parts by mass or more, and more desirably 20 parts by mass or more, relative to 100 parts by mass of the rubber-based polymer. The content of the filler is, for example, 300 parts by mass or less, desirably 250 parts by mass or less, and more desirably 200 parts by mass or less, relative to 100 parts by mass of the rubber-based polymer. The adhesive layer 10 does not need to contain a filler.

Desirably, the adhesive layer 10 further contains a tackifier. In this case, for example, the surface 11 formed from the adhesive layer 10 is likely to have a desired adhesion.

The tackifier is not limited to a particular substance. The tackifier is, for example, a given resin. Examples of the resin include a rosin-based tackifier resin, a terpene-based tackifier resin, a hydrocarbon-based tackifier resin, a phenol-based tackifier resin, a ketone-based tackifier resin, a polyamide-based tackifier resin, an epoxy-based tackifier resin, and an elastomer-based tackifier resin. Examples of rosin-based tackifier resins include unmodified rosin, modified rosin, rosin-phenol-based resins, and rosin ester-based resins. Examples of terpene-based tackifier resins include terpene-based resins, terpene-phenol-based resins, styrene-modified terpene-based resins, aromatic modified terpene-based resins, and hydrogenated terpene-based resins. Examples of hydrocarbon-based tackifier resins include aliphatic hydrocarbon resins, aliphatic cyclic hydrocarbon resins, aromatic hydrocarbon resins, aliphatic-aromatic petroleum resins, aliphatic and alicyclic petroleum resins, hydrogenated hydrocarbon resins, coumarone-based resins, and coumarone-indene-based resins. Examples of aromatic hydrocarbon resins include styrene-based resins and xylene-based resins. Examples of phenol-based tackifier resins include alkylphenol-based resins, xylene formaldehyde-based resins, resol, and novolac. The tackifier is desirably a cycloaliphatic hydrocarbon resin or an aromatic hydrocarbon resin.

The content of the tackifier in the adhesive layer 10 is not limited to a particular value. For example, in the adhesive layer 10, the content of the tackifier is, for example, 5 parts by mass or more, desirably 10 parts by mass or more, and more desirably 20 parts by mass or more, relative to 100 parts by mass of the rubber-based polymer. The content of the tackifier is, for example, 200 parts by mass or less, desirably 100 parts by mass or less, and more desirably 80 parts by mass or less, relative to 100 parts by mass of the rubber-based polymer.

The thickness of the adhesive layer 10 is not limited to a specific value. The thickness is, for example, 50 $\mu$m to 400 $\mu$m. The thickness of the adhesive layer 10 may be 70 $\mu$m or more, and may be 80 $\mu$m or more. The thickness of the adhesive layer 10 may be 300 $\mu$m or less, and may be 250 $\mu$m or less.

As shown in FIG. 1, the sealing member 1a includes, for example, a pair of adhesive layers 10, with a foam 20 disposed between the adhesive layers 10. In the sealing member 1a, the surface portions 10e each may be formed solely of the adhesive layer 10 or of the adhesive layer 10 and a part of the foam 20.

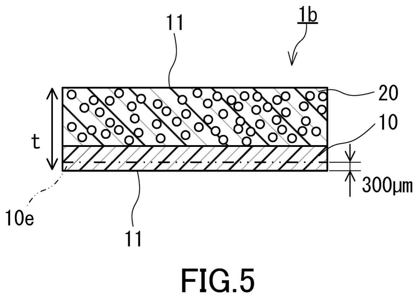

The sealing member 1a may be modified in various ways. For example, the sealing member 1a may be modified as a sealing member 1b shown in FIG. 5. The sealing member 1b is configured similarly to the sealing member 1a, except for the parts described in detail below. The same reference numerals are applied to the components of the sealing member 1b that are identical to or correspond to the components of the sealing member 1a, and detailed descriptions therefor are omitted. The descriptions for the sealing member 1a can apply to the sealing member 1b unless technically contradictory.

As shown in FIG. 5, the sealing member 1b includes an adhesive layer 10 and a foam 20. The adhesive layer 10 forms one surface 11 in the thickness direction of the sealing member 1b. The foam 20 forms the other surface 11 in the thickness direction of the sealing member 1b. In the sealing member 1b, the surface portion 10e including the adhesive layer 10 has a breaking strain of 500% or more, and satisfies the requirement: tensile force $F_A$ [N/20 mm] > adhesive force $F_B$ [N/20 mm].

In the sealing member 1b, the tensile elasticity of the foam 20 is not limited to a specific value. The tensile elasticity of the foam 20 is, for example, 3 MPa or less. With this configuration, the sealing member 1b is disposed in a compressively-deformed state between the adherends, whereby the surface 11 formed by the foam 20 and the adherends is likely to be maintained in a watertight state. The tensile elasticity of the foam 20 is desirably 2.5 MPa or less, and more desirably 2 MPa or less. The tensile elasticity of the foam 20 is, for example, 0.5 MPa or more.

Examples

The present invention will be described below in more detail with reference to examples. The present invention is not limited to the following examples.

<Example 1>

An SBS resin, TR-2003, manufactured by ENEOS Materials Corporation and a tackifier, ARKON M-115, manufactured by ARAKAWA CHEMICAL INDUSTRIES, LTD. were kneaded in the respective mixing proportions of 100 parts by mass and 35 parts by mass to obtain a mixture. This mixture was heat-pressed under the conditions of 150°C and 4 MPa to obtain a pressure-sensitive adhesive sheet according to Example 1 having a thickness of 100 $\mu$m. A foam, No. 6800, manufactured by Nitto Denko Corporation, was disposed between the two pressure-sensitive adhesive sheets according to Example 1 to obtain a stack. This foam was an EPDM foam having a closed-cell structure and had a thickness of 10 mm. This stack was heated in an oven set at 140°C under a pressure of 2 kPa to bond the two pressure-sensitive adhesive sheets according to Example 1 to the foam. Thus, a sealing member according to Example 1 was obtained.

<Examples 2 to 5>

Except for the following points, the same procedure as in Example 1 was followed to obtain sealing members according to Examples 2 to 5. As the SBS resin, a SBS resin, D1155, manufactured by KRATON CORPORATION was used instead of the TR-2003. The mixing proportions of the SBS resin and the tackifier were adjusted as shown in Table 1A to obtain pressure-sensitive adhesive sheets according to Examples 2 to 5. The pressure-sensitive adhesive sheets according to Examples 2 to 5 were used instead of the pressure-sensitive adhesive sheet according to Example 1, thereby producing sealing members according to Examples 2 to 5, respectively.

<Example 6>

Except for the following points, the same procedure as in Example 1 was followed to obtain a sealing member according to Example 6. An SBS resin, TR-2003, a tackifier, ARKON M-115, and heavy calcium carbonate (filler) manufactured by MARUO CALCIUM CO., LTD., were mixed in a ratio of 100 parts by mass, 35 parts by mass, and 35 parts by mass, respectively, to obtain a mixture. This mixture was hot-pressed under the conditions of 150°C and 4 MPa to obtain a pressure-sensitive adhesive sheet according to Example 6 having a thickness of 100 $\mu$m. The pressure-sensitive adhesive sheet according to Example 6 was used instead of the pressure-sensitive adhesive sheet according to Example 1, thereby producing a sealing member according to Example 6.

<Example 7>

Except for the following points, the same procedure as in Example 1 was followed to obtain a sealing member according to Example 7. As the SBS resin, a SBS resin, Tafpren A, manufactured by Asahi Kasei Corporation was used instead of TR-2003. Here, Tafpren is a registered trademark. The thickness of the pressure-sensitive adhesive sheet was adjusted to 300 $\mu$m. The pressure-sensitive adhesive sheet according to Example 7 was used instead of the pressure-sensitive adhesive sheet according to Example 1, thereby producing a sealing member according to Example 7.

<Example 8>

Except for the following points, the same procedure as in Example 7 was followed to obtain a sealing member according to Example 8. An SBS resin, Tafpren A, a tackifier, ARKON M-115, and heavy calcium carbonate (filler) manufactured by MARUO CALCIUM CO., LTD., were mixed in a ratio of 100 parts by mass, 45 parts by mass, and 35 parts by mass, respectively, to obtain a mixture. This mixture was hot-pressed under the conditions of 150°C and 4 MPa to obtain a pressure-sensitive adhesive sheet according to Example 8 having a thickness of 300 $\mu$m. The pressure-sensitive adhesive sheet according to Example 8 was used instead of the pressure-sensitive adhesive sheet according to Example 7, thereby producing a sealing member according to Example 8.

<Example 9>

A foam EE-1000, manufactured by Nitto Denko Corporation, was used instead of No. 6800. Except for this, the same procedure was followed as in Example 4 to obtain a sealing member according to Example 9. The foam EE-1000 is an EPDM foam having an open-cell structure. The foam EE-1000 had a thickness of 10 mm.

<Example 10>

One pressure-sensitive adhesive sheet according to Example 4 was bonded to one face of a foam. Except for this, the same procedure as in Example 4 was followed to obtain a sealing member according to Example 10.

<Example 11>

As a foam, a urethane foam, Super Sheet H, manufactured by Nippon Spring Co., Ltd., was used instead of No. 6800. Except for this, the same procedure as in Example 4 was followed to obtain a sealing member according to Example 11. The Super Sheet H had a thickness of 10 mm.

<Example 12>

The mixing proportions of the SBS resin and the tackifier were adjusted as shown in Table 1B. Except for this, the same procedure as in Example 2 was followed to obtain pressure-sensitive adhesive sheet according to Example 12. The pressure-sensitive adhesive sheet according to Example 12 was used instead of the pressure-sensitive adhesive sheet according to Example 1. Except for this, the same procedure as in Example 1 was followed to produce a sealing member according to Example 12.

<Example 13>

One pressure-sensitive adhesive sheet according to Example 4 was bonded to one face of a foam. Except for this, the same procedure as in Example 9 was followed to obtain a sealing member according to Example 13.

<Example 14>

The pressure-sensitive adhesive sheet according to Example 12 was used instead of the pressure-sensitive adhesive sheet according to Example 4. Except for this, the same procedure as in Example 13 was followed to obtain a sealing member according to Example 14.

<Example 15>

Except for the following points, the same procedure as in Example 1 was followed to obtain a sealing member according to Example 15. An SEBS resin, G1657, manufactured by KRATON CORPORATION, was used instead of TR-2003. The mixing proportions of the SEBS resin and the tackifier were adjusted as shown in Table 1C to obtain a pressure-sensitive adhesive sheet according to Example 15. The pressure-sensitive adhesive sheet according to Example 15 was used instead of the pressure-sensitive adhesive sheet according to Example 1, thereby producing a sealing member according to Example 15.

<Example 16>

The thickness of the pressure-sensitive adhesive sheet was changed to 200 $\mu$m. Except for this, the same procedure as in Example 15 was followed to obtain a pressure-sensitive adhesive sheet according to Example 16. The pressure-sensitive adhesive sheet according to Example 16 was used instead of the pressure-sensitive adhesive sheet according to Example 1, thereby producing a sealing member according to Example 16.

<Examples 17 and 18>

The mixing proportions of the SEBS resin and the tackifier were adjusted as shown in Table 1C. Except for this, the same procedure as in Example 16 was followed to obtain pressure-sensitive adhesive sheets according to Examples 17 and 18. The pressure-sensitive adhesive sheets according to Examples 17 and 18 were used instead of the pressure-sensitive adhesive sheet according to Example 16, thereby producing sealing members according to Examples 17 and 18, respectively.

<Example 19>

The mixing proportions of the SEBS resin and the tackifier were adjusted as shown in Table 1C, and the thickness of the pressure-sensitive adhesive sheet was changed to 300 $\mu$m. Except for this, the same procedure as in Example 16 was followed to obtain a pressure-sensitive adhesive sheet according to Example 19. The pressure-sensitive adhesive sheet according to Example 19 was used instead of the pressure-sensitive adhesive sheet according to Example 16, thereby producing a sealing member according to Example 19.

<Example 20>

The pressure-sensitive adhesive sheet according to Example 17 was used instead of the pressure-sensitive adhesive sheet according to Example 4. Except for this, the same procedure as in Example 10 was followed to obtain a sealing member according to Example 20.

<Example 21>

The pressure-sensitive adhesive sheet according to Example 17 was used instead of the pressure-sensitive adhesive sheet according to Example 4. Except for this, the same procedure as in Example 13 was followed to obtain a sealing member according to Example 21.

<Example 22>

The pressure-sensitive adhesive sheet according to Example 18 was used instead of the pressure-sensitive adhesive sheet according to Example 4. Except for this, the same procedure as in Example 13 was followed to obtain a sealing member according to Example 22.

<Comparative Example 1>

Acrylic double-sided pressure-sensitive adhesive sheets each having a nonwoven fabric as a substrate were adhered to both surfaces of a foam No. 6800 having a thickness of 10 mm in the thickness direction to obtain a sealing member according to Comparative Example 1. The acrylic double-sided pressure-sensitive adhesive sheet had a thickness of 120 μm.

<Comparative Example 2>

A substrate-less double-sided acrylic pressure-sensitive adhesive sheet was used instead of the aforementioned acrylic-based double-sided pressure-sensitive adhesive sheet. Except for this, the same procedure as in Comparative Example 1 was followed to obtain a sealing member according to Comparative Example 2. The double-sided acrylic pressure-sensitive adhesive sheet had a thickness of 40 μm.

<Comparative Example 3>

Except for the following points, the same procedure as in Example 2 was followed to obtain a sealing member according to Comparative Example 3. The mixing proportions of the SBS resin and the tackifier in production of the pressure-sensitive adhesive sheet were adjusted as shown in Table 2 to obtain a pressure-sensitive adhesive sheet according to Comparative Example 3. The pressure-sensitive adhesive sheet according to Comparative Example 3 was used instead of the pressure-sensitive adhesive sheet according to Example 2, thereby producing a sealing member according to Comparative Example 3.

<Comparative Example 4>

The conditions for producing the pressure-sensitive adhesive sheet were adjusted such that the pressure-sensitive adhesive sheet would have a thickness of 30 μm. Except for this, the same procedure as in Example 1 was followed to obtain a sealing member according to Comparative Example 4.

<Comparative Examples 5 and 6>

The conditions for preparing the pressure-sensitive adhesive sheets were adjusted such that the pressure-sensitive adhesive sheets would have thicknesses of 100 μm and 200 μm. Except for this, the same procedure as in Example 8 was followed to obtain sealing members according to Comparative Examples 5 and 6.

<Comparative Example 7>

The amount of the added filler was changed to 160 parts by mass in preparation of a pressure-sensitive adhesive sheet. Except for this, the same procedure as in Example 6 was followed to obtain a sealing member according to Comparative Example 7.

(Tensile test)

From the sealing member according to each of Examples and each of Comparative Examples, a portion (surface portion) including a pressure-sensitive adhesive sheet and having a thickness of 300 μm was sliced to prepare a test piece, thereby conducting a tensile test. The test piece was rectangular in shape having a width of 10 mm and a length of 40 mm in a plan view. The tensile test was conducted under the following conditions: room temperature, a test speed of 1000 mm/min, and a chuck-to-chuck distance of 10 mm. Other conditions for the tensile test were determined in accordance with JIS K6251. Tensile strength [MPa], tensile force $F_A$, and breaking strain $\varepsilon_B$ [%] were calculated based on the following Equations (2), (3), and (4). The results are shown in Table 1A, Table 1B, Table 1C, and Table 2.

Tensile strength [MPa] = maximum test force [N] / cross-sectional area of test piece [mm$^2$]          Equation (2)

Tensile force $F_A$ [N/20 mm] = 20 mm × thickness of test piece [mm] × maximum test force [N] / cross-sectional area of test piece [mm$^2$]          Equation (3)

Breaking strain $\varepsilon_B$ [%] = 100 × chuck-to-chuck distance at break of test piece [mm] / chuck-to-chuck distance immediately before tensile test          Equation (4)

Based on the results of the tensile tests, a graph was created to express the tensile force F, determined by the following Equation (5), as a function of strain [%]. Based on this graph, an average change rate $R_{AV}$ was determined in accordance with Equation (1). It should be noted that in the determination of the average change rate $R_{AV}$, the strain is not expressed as a percentage but as a ratio of the deformation of the test piece to its original length that is set as 1. For reference, Equation (1) is restated below. In addition, a specific strain $\varepsilon_C$ was determined from this graph. The specific strain $\varepsilon_C$ corresponds to an intersection of a straight line passing through a pair of points on the graph where the strain ratio is 20% and 30%, and a straight line passing through a pair of points on the graph where the strain ratio is 80% and 90%. The results are shown in Table 1A, Table 1B, Table 1C, and Table 2.

Tensile force F = 20 mm × thickness of test piece [mm] × test force [N] / cross-sectional area of test piece [mm$^2$]          Equation (5)

$$R_{AV} = (F_{60} - F_{40}) / (\varepsilon_b - \varepsilon_a) \qquad \text{Equation (1)}$$

Test pieces were prepared from the pressure-sensitive adhesive sheet according to Example 4 and the foam used in Example 10, and the same procedure as in the aforementioned tensile test was followed to conduct a tensile test. The slope in the range of 5% to 25% of the stress-strain curve obtained from the tensile test was determined as the tensile elastic modulus of the surface. Here, the tensile elastic modulus of the surface in Example 10 is the tensile elastic modulus of the surface formed from the foam.

(Measurement of 90° peel adhesion)

A test piece was prepared using the sealing member of each Example and each Comparative Example. The test piece had a rectangular shape having a length of 100 mm and a width of 20 mm in a plan view. The test piece was placed on a test plate made of SUS304 having a thickness of 1.5 mm, and a roller weighing 2 kg was moved back and forth once over the test piece to adhere the test piece and the test plate. After the adhesion of the test piece to the test plate, no load was applied to the test piece, and the test piece was stored with the test plate in an oven maintained at 100°C for 7 days. The test piece was then taken out from the oven, allowed to cool at room temperature for one hour, and its 90° peel adhesion $F_B$ was measured in accordance with JIS Z 0237:2022. The peel speed was adjusted to 300 mm/min. The results are shown in Table 1A, Table 1B, Table 1C, and Table 2.

(Evaluation of collectability of sealing member)

The sealing member for each Example and each Comparative Example was placed on a SUS304 plate having a thickness of 1.5 mm, and a roller weighing 2 kg was moved back and forth once over the sealing member to adhere the sealing member to the plate. The test piece was stored with the test plate in an oven maintained at 100°C for 7 days. The test piece was then taken out from the oven, allowed to cool at room temperature for one hour, and then, the sealing member was grasped on the surface by hand and peeled off from the plate at a speed of approximately 300 mm/min. In this case, the collectability of the sealing member was evaluated according to the following criteria. The results are shown in Table 1A, Table 1B, Table 1C, and Table 2.

Good: The sealing member does not break, and no pressure-sensitive adhesive residue caused by the sealing member remains on the plate.
Not enough: It is confirmed that the sealing member breaks and/or pressure-sensitive adhesive residue caused by sealing member remains on the plate.

<Evaluation of watertight performance>

The sealing member according to each Example and each Comparative Example was punched into the shape of an annular ring having an inner diameter of 50 mm and an outer diameter of 70 mm to prepare a test piece for IPX7 testing. The test piece was placed between two acrylic sheets, and spacers were arranged around the test piece between the two acrylic sheets to fix the test piece in a state where a given compressive strain was induced in the thickness direction of the acrylic sheets. The acrylic sheets were Acrylite EX, manufactured by Mitsubishi Chemical Corporation, having a thickness of 10 mm. Thus, a sample for IPX7 testing was prepared. Here, Acrylite is a registered trademark. This sample was submerged in a water tank containing water to a height of 1 m. After 30 minutes the sample was taken out. The annular test piece was checked for water leakage into the interior thereof to determine whether the sample being compliant with the IPX7 standards. If no water leakage was detected, the sample was evaluated as compliant with the IPX7 standards. The IPX7 test was conducted by varying the compressive strain to determine the minimum compression rate required to be compliant with the IPX7 standards. The results are shown in Table 1A, Table 1B, Table 1C, and Table 2.

As shown in Tables 1A to 1C, the collectability of the sealing member in each Example was good. On the other hand, as shown in Table 2, the collectability of the sealing member in each Comparative Example was not considered good. Based on the comparison between Examples and Comparative Examples, it is understood that the sealing member can be easily peeled from the adherend after being exposed to a high-temperature environment for a long period of time, provided that the breaking strain $\varepsilon_B$ is 500% or more and a requirement: tensile force $F_A$ > adhesive force $F_B$ is satisfied. In Comparative Example 1, the breaking strain $\varepsilon_B$ was 15%, and the sealing member broke during the evaluation of collectability. In Comparative Examples 2 to 7, the requirement: tensile force $F_A$ > adhesive force $F_B$ was not satisfied, and part of the sealing member remained on the plate during the evaluation of collectability.

A first aspect of the present invention provides a sealing member,

the sealing member having a thickness of 1 mm to 40 mm,
the sealing member including a surface portion having a thickness of 300 $\mu$m, the surface portion including a surface in a thickness direction of the sealing member, wherein
the surface portion has a breaking strain of 500% or more and satisfies the following requirement: tensile force $F_A$ [N/20 mm] > adhesive force $F_B$ [N/20 mm],
the tensile force $F_A$ is expressed as $F_1 \cdot t_A \cdot 20/S_1$, where $F_1$ [N] is a maximum test force in a tensile test conducted on a test piece prepared from the surface portion, $S_1$ [mm$^2$] is a cross-sectional area of the test piece, and $t_A$ [mm] is a thickness of the surface portion,
the test piece in the tensile test has a rectangular shape having a width of 10 mm and a length of 40 mm in a plan view,
a chuck-to-chuck distance in the tensile test is 10 mm,
a test speed in the tensile test is 1000 mm/min, and
the adhesive force $F_B$ is a 90° peel adhesion [N/20 mm], which is obtainable by maintaining an environmental temperature at 100°C for 7 days for a test piece prepared from the sealing member while the test piece being adhered to a test plate, and by conducting a measurement by peeling the test piece from the test plate in accordance with Japanese Industrial Standards (JIS) Z 0237:2022.

A second aspect of the present invention provides a sealing member according to the first aspect, wherein

the surface portion has an average change rate of not less than 1.5 [N/20 mm] in the tensile test,
the average change rate is a ratio of an amount of change in the tensile force F [N/20 mm] to an amount of change in a strain in a range of a test force ratio being from 40% to 60% in the tensile test,
the test force ratio is a ratio of a test force $F_2$ [N] to the maximum test force $F_1$ [N] in the tensile test, and
the tensile force F is expressed as $F_2 \cdot t_A \cdot 20 / S_1$, where $F_2$ [N] is the test force, $S_1$ [mm$^2$] is a cross-sectional area of the test piece, and $t_A$ [mm] is the thickness of the surface portion.

A third aspect of the present invention provides a sealing member according to the first aspect or a second aspect, wherein

the surface portion exhibits a specific strain of 1800% or less in the tensile test,
the specific strain is a strain corresponding to an intersection of a first straight line and a second straight line in a graph expressing the tensile force F [N/20 mm] as a function of strain,

the first straight line is a straight line passing through a pair of points where a strain ratio is 20% and 30% in the graph,
the second straight line is a straight line passing through a pair of points where a strain ratio is 80% and 90% in the graph,
where the strain ratio is a ratio of a strain of the test piece to the breaking strain in the tensile test, and

the tensile force F is expressed as $F_2 \cdot t_A \cdot 20 / S_1$, where $F_2$ [N] is a test force obtained in the tensile test, $S_1$ [mm$^2$] is the cross-sectional area of the test piece, and $t_A$ [mm] is the thickness of the surface portion.

A fourth aspect of the present invention provides a sealing member according to any one of the first to the third aspects, including at least two layers.
A fifth aspect of the present invention provides a sealing member according to any one of the first to the fourth aspects, including a foam.
A sixth aspect of the present invention provides a sealing member according to the fifth aspect, wherein the foam has a closed-cell structure.
A seventh aspect of the present invention provides a sealing member according to any one of the first to the sixth aspects, wherein the surface portion includes a filler.

[Table 1A]

| | | Example 1 | Example 2 | Example 3 | Example 4 |
|---|---|---|---|---|---|
| Pressure-sensitive adhesive sheet | SBS type | TR-2003 | D1155 | D1155 | D1155 |
| | SBS [parts by mass] | 100 | 100 | 100 | 100 |
| | Tackifier [parts by mass] | 35 | 10 | 25 | 35 |
| | Filler [parts by mass] | 0 | 0 | 0 | 0 |
| | Arrangement | Double-sided | Double-sided | Double-sided | Double-sided |
| | Thickness [$\mu$m] | 100 | 100 | 100 | 100 |
| Foam | | No.6800 | No.6800 | No.6800 | No.6800 |
| Tensile strength of surface portion [MPa] | | 24.5 | 20.6 | 32.1 | 27.2 |
| Breaking strain $\varepsilon_B$ [%] | | 2800 | 2100 | 3000 | 2900 |
| Tensile force $F_A$ [N/20mm] | | 48.9 | 41.2 | 64.2 | 54.3 |
| Adhesive force $F_B$ [N/20mm] | | 31 | 16.9 | 23.5 | 34.1 |
| $F_A$-$F_B$ [N/20mm] | | 18.0 | 24.3 | 40.7 | 20.2 |
| Average change rate $R_{AV}$ [N/20mm] | | 4.8 | 3.0 | 4.2 | 4.6 |
| Specific strain $\varepsilon_C$ [%] | | 1700 | 1200 | 1700 | 1700 |
| Tensile elasticity of surface [MPa] | | - | - | - | 5.3 |
| Evaluation of collectability | | Good | Good | Good | Good |
| Compressive strain to be compliant with IPX7 [%] | | 10.0 | 10.0 | 10.0 | 10.0 |

[Table 1A] Continued

|  |  | Example 5 | Example 6 | Example 7 | Example 8 |
|---|---|---|---|---|---|
| Pressure-sensitive adhesive sheet | SBS type | D1155 | TR-2003 | Tafpren A | Tafpren A |
|  | SBS [parts by mass] | 100 | 100 | 100 | 100 |
|  | Tackifier [parts by mass] | 45 | 35 | 35 | 45 |
|  | Filler [parts by mass] | 0 | 35 | 0 | 35 |
|  | Arrangement | Double-sided | Double-sided | Double-sided | Double-sided |
|  | Thickness [μm] | 100 | 100 | 300 | 300 |
| Foam |  | No.6800 | No.6800 | No.6800 | No.6800 |
| Tensile strength of surface portion [MPa] |  | 24.9 | 18.4 | 9.0 | 12.6 |
| Breaking strain $\varepsilon_B$ [%] |  | 2700 | 2300 | 2400 | 2800 |
| Tensile force $F_A$ [N/20mm] |  | 49.8 | 36.8 | 54.0 | 75.6 |
| Adhesive force $F_B$ [N/20mm] |  | 42.5 | 35.0 | 50.4 | 65.9 |
| $F_A$-$F_B$ [N/20mm] |  | 7.3 | 1.8 | 3.6 | 9.7 |
| Average change rate $R_{AV}$ [N/20mm] |  | 3.4 | 2.6 | 1.8 | 2.4 |
| Specific strain $\varepsilon_C$ [%] |  | 1850 | 1500 | 1450 | 2400 |
| Tensile elasticity of surface [MPa] |  | - | - | - | - |
| Evaluation of collectability |  | Good | Good | Good | Good |
| Compressive strain to be compliant with IPX7 [%] |  | 10.0 | 10.0 | 10.0 | 10.0 |

[Table 1B]

|  |  | Example 9 | Example 10 | Example 11 | Example 12 | Example 13 | Example 14 |
|---|---|---|---|---|---|---|---|
| Pressure-sensitive adhesive sheet | SBS type | D1155 | D1155 | D1155 | D1155 | D1155 | D1155 |
|  | SBS [parts by mass] | 100 | 100 | 100 | 100 | 100 | 100 |
|  | Tackifier [parts by mass] | 35 | 35 | 25 | 60 | 35 | 60 |
|  | Filler [parts by mass] | 0 | 0 | 0 | 0 | 0 | 0 |
|  | Arrangement | Single-sided | Double-sided | Double-sided | Double-sided | Single-sided | Single-sided |
|  | Thickness [μm] | 100 | 100 | 100 | 100 | 100 | 100 |
| Foam |  | EE-1000 | No.6800 | Urethane foam | No.6800 | EE-1000 | EE-1000 |
| Tensile strength of surface portion [MPa] |  | 27.2 | 27.2 | 27.2 | 22.5 | 27.2 | 22.5 |
| Breaking strain $\varepsilon_B$ [%] |  | 2900 | 2900 | 2900 | 1750 | 2900 | 1750 |
| Tensile force $F_A$ [N/20mm] |  | 54.3 | 54.3 | 54.3 | 45.0 | 54.3 | 45.0 |
| Adhesive force $F_B$ [N/20mm] |  | 34.1 | 34.1 | 34.1 | 43.5 | 34.1 | 43.5 |
| $F_A$-$F_B$ [N/20mm] |  | 20.2 | 20.2 | 20.2 | 1.5 | 20.2 | 1.5 |
| Average change rate $R_{AV}$ [N/20mm] |  | 4.6 | 4.6 | 4.6 | 3.8 | 4.6 | 3.8 |
| Specific strain $\varepsilon_C$ [%] |  | 1750 | 1750 | 1750 | 700 | 1750 | 700 |

(continued)

|  | Example 9 | Example 10 | Example 11 | Example 12 | Example 13 | Example 14 |
|---|---|---|---|---|---|---|
| Tensile elasticity of surface [MPa] | - | 0.5 | - | - | - | - |
| Evaluation of collectability | Good | Good | Good | Good | Good | Good |
| Compressive strain to be compliant with IPX7 [%] | 10.0 | 60.0 | 90.0 | 10.0 | 90.0 | 90.0 |

[Table 1C]

|  |  | Example 15 | Example 16 | Example 17 | Example 18 |
|---|---|---|---|---|---|
| Pressure-sensitive adhesive sheet | SEBS type | G1657 | G1657 | G1657 | G1657 |
|  | SEBS [parts by mass] | 100 | 100 | 100 | 100 |
|  | Tackifier [parts by mass] | 35 | 35 | 45 | 60 |
|  | Filler [parts by mass] | 0 | 0 | 0 | 0 |
|  | Arrangement | Double-sided | Double-sided | Double-sided | Double-sided |
|  | Thickness [μm] | 100 | 200 | 200 | 200 |
| Foam |  | No.6800 | No.6800 | No.6800 | No.6800 |
| Tensile strength of surface portion [MPa] |  | 6.4 | 6.4 | 6.5 | 6.7 |
| Breaking strain $\varepsilon_B$ [%] |  | 1400 | 1400 | 1400 | 1200 |
| Tensile force $F_A$ [N/20mm] |  | 12.8 | 25.6 | 26.0 | 26.8 |
| Adhesive force $F_B$ [N/20mm] |  | 10.4 | 10.4 | 20.9 | 25.8 |
| $F_A$-$F_B$ [N/20mm] |  | 2.4 | 15.2 | 5.1 | 1.0 |
| Average change rate $R_{AV}$ [N/20mm] |  | 1.0 | 2.0 | 1.8 | 1.9 |
| Specific strain $\varepsilon_C$ [%] |  | 950 | 950 | 800 | 750 |
| Tensile elasticity of surface [MPa] |  | - | - | - | - |
| Evaluation of collectability |  | Good | Good | Good | Good |
| Compressive strain to be compliant with IPX7 [%] |  | 10.0 | 10.0 | 10.0 | 10.0 |

[Table 1C] Continued

|  |  | Example 19 | Example 20 | Example 21 | Example 22 |
|---|---|---|---|---|---|
| Pressure-sensitive adhesive sheet | SEBS type | G1657 | G1657 | G1657 | G1657 |
|  | SEBS [parts by mass] | 100 | 100 | 100 | 100 |
|  | Tackifier [parts by mass] | 80 | 45 | 45 | 60 |
|  | Filler [parts by mass] | 0 | 0 | 35 | 0 |
|  | Arrangement | Double-sided | Single-sided | Single-sided | Single-sided |
|  | Thickness [μm] | 300 | 200 | 200 | 200 |
| Foam |  | No.6800 | No.6800 | EE-1000 | EE-1000 |
| Tensile strength of surface portion [MPa] |  | 6.7 | 6.5 | 6.5 | 6.7 |
| Breaking strain $\varepsilon_B$ [%] |  | 1400 | 1400 | 1400 | 1200 |
| Tensile force $F_A$ [N/20mm] |  | 40.2 | 26.0 | 26.0 | 26.8 |
| Adhesive force $F_B$ [N/20mm] |  | 37.0 | 20.9 | 20.9 | 25.8 |

(continued)

|  | Example 19 | Example 20 | Example 21 | Example 22 |
|---|---|---|---|---|
| $F_A$-$F_B$ [N/20mm] | 3.2 | 5.1 | 5.1 | 1.0 |
| Average change rate $R_{AV}$ [N/20mm] | 3.4 | 2.0 | 2.0 | 1.9 |
| Specific strain $\varepsilon_C$ [%] | 850 | 800 | 800 | 750 |
| Tensile elasticity of surface [MPa] | - | - | - | - |
| Evaluation of collectability | Good | Good | Good | Good |
| Compressive strain to be compliant with IPX7 [%] | 10.0 | 60.0 | 90.0 | 90.0 |

[Table 2]

| | | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|
| Pressure-sensitive adhesive sheet | SBS type | - | - | D1155 | D1155 | D1155 | Tafpren A | TR-2003 |
| | SBS [parts by mass] | - | - | 100 | 100 | 100 | 100 | 100 |
| | Tackifier [parts by mass] | - | - | 70 | 35 | 45 | 45 | 35 |
| | Filler [parts by mass] | - | - | 0 | 0 | 35 | 35 | 160 |
| | Arrangement | Double-sided | Double-sided | Double-sided | Double-sided | Double-sided | Double-sided | Double-sided |
| | Thickness [$\mu$m] | 120 | 40 | 100 | 30 | 100 | 200 | 100 |
| Foam | | No.6800 | No.6800 | No.6800 | No.6800 | No.6800 | No.6800 | No.6800 |
| Tensile strength of surface portion [MPa] | | 10.8 | 6.0 | 14.1 | 24.5 | 12.6 | 12.6 | 11.0 |
| Breaking strain $\varepsilon_B$ [%] | | 15 | 1000 | 1800 | 2800 | 2800 | 2800 | 1800 |
| Tensile force $F_A$ [N/20mm] | | 25.9 | 4.8 | 28.2 | 14.7 | 25.2 | 50.4 | 22.0 |
| Adhesive force $F_B$ [N/20mm] | | 17.6 | 13.2 | 58.3 | 31 | 65.9 | 65.9 | 24.4 |
| $F_A$-$F_B$ [N/20mm] | | 8.3 | -8.4 | -30.1 | -16.3 | -40.7 | -15.5 | -2.4 |
| Average change rate $R_{AV}$ [N/20mm] | | 199.2 | 0.2 | 1.1 | 1.4 | 0.4 | 0.8 | 1.0 |
| Specific strain $\varepsilon_C$ [%] | | 2 | 750 | 1000 | 1700 | 2400 | 2400 | 1150 |
| Evaluation of collectability | | Not enough | Not enough | Not enough | Not enough | Not enough | Not enough | Not enough |
| Compressive strain to be compliant with IPX7 [%] | | 10.0 | 10.0 | 10.0 | 10.0 | 10.0 | 10.0 | 10.0 |
| *Com.Ex.: Comparative Example | | | | | | | | |

## Claims

1. A sealing member,

the sealing member having a thickness of 1 mm to 40 mm,

the sealing member comprising a surface portion having a thickness of 300 $\mu$m, the surface portion including a surface in a thickness direction of the sealing member, wherein

the surface portion has a breaking strain of 500% or more and satisfies the following requirement: tensile force $F_A$ [N/20 mm] > adhesive force $F_B$ [N/20 mm],

the tensile force $F_A$ is expressed as $F_1 \cdot t_A \cdot 20/S_1$, where $F_1$ [N] is a maximum test force in a tensile test conducted on a test piece prepared from the surface portion, $S_1$ [mm$^2$] is a cross-sectional area of the test piece, and $t_A$ [mm] is a thickness of the surface portion,

the test piece in the tensile test has a rectangular shape having a width of 10 mm and a length of 40 mm in a plan view,

a chuck-to-chuck distance in the tensile test is 10 mm,

a test speed in the tensile test is 1000 mm/min, and

the adhesive force $F_B$ is a 90° peel adhesion [N/20 mm], which is obtainable by maintaining an environmental temperature at 100°C for 7 days for a test piece prepared from the sealing member while the test piece being adhered to a test plate, and by conducting a measurement by peeling the test piece from the test plate in accordance with Japanese Industrial Standards (JIS) Z 0237:2022.

2. The sealing member according to claim 1, wherein

the surface portion has an average change rate of not less than 1.5 [N/20 mm] in the tensile test,

the average change rate is a ratio of an amount of change in the tensile force F [N/20 mm] to an amount of change in a strain in a range of a test force ratio being from 40% to 60% in the tensile test,

the test force ratio is a ratio of a test force $F_2$ [N] to the maximum test force $F_1$ [N] in the tensile test, and

the tensile force F is expressed as $F_2 \cdot t_A \cdot 20/S_1$, where $F_2$ [N] is the test force, $S_1$ [mm$^2$] is a cross-sectional area of the test piece, and $t_A$ [mm] is the thickness of the surface portion.

3. The sealing member according to claim 1, wherein

the surface portion exhibits a specific strain of 1800% or less in the tensile test,

the specific strain is a strain corresponding to an intersection of a first straight line and a second straight line in a graph expressing the tensile force F [N/20 mm] as a function of strain,

the first straight line is a straight line passing through a pair of points where a strain ratio is 20% and 30% in the graph,

the second straight line is a straight line passing through a pair of points where a strain ratio is 80% and 90% in the graph,

where the strain ratio is a ratio of a strain of the test piece to the breaking strain in the tensile test, and

the tensile force F is expressed as $F_2 \cdot t_A \cdot 20/S_1$, where $F_2$ [N] is a test force obtained in the tensile test, $S_1$ [mm$^2$] is the cross-sectional area of the test piece, and $t_A$ [mm] is the thickness of the surface portion.

4. The sealing member according to claim 1, comprising at least two layers.

5. The sealing member according to claim 1, comprising a foam.

6. The sealing member according to claim 5, wherein
the foam has a closed-cell structure.

7. The sealing member according to claim 1, wherein
the surface portion comprises a filler.

FIG.1

FIG.2

1a

3a

D_P

FIG.3A

1a

3a

D_P

FIG.3B

FIG.4A

FIG.4B

FIG.5

## INTERNATIONAL SEARCH REPORT

| International application No. |
| --- |
| **PCT/JP2023/045385** |

**A. CLASSIFICATION OF SUBJECT MATTER**

*C09K 3/10*(2006.01)i; *B32B 5/18*(2006.01)i; *B32B 27/00*(2006.01)i; *C09J 7/38*(2018.01)i; *C09J 11/04*(2006.01)i; *C09J 201/00*(2006.01)i

FI: C09K3/10 Z; C09J7/38; B32B5/18; C09J201/00; B32B27/00 M; C09J11/04

According to International Patent Classification (IPC) or to both national classification and IPC

**B. FIELDS SEARCHED**

Minimum documentation searched (classification system followed by classification symbols)

B32B1/00-43/00; C09J1/00-5/10; C09J7/00-7/50; C09J9/00-201/10; C09K3/10-3/12; C08J9/00-9/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-169421 A (3M INNOVATIVE PROPERTIES COMPANY) 05 July 2007 (2007-07-05)<br>claims 1-2, 4, 10-11, paragraphs [0010], [0013], [0020], [0068], [0085]-[0091], [0096], examples | 1-7 |
| A | JP 8-67859 A (NITTO DENKO CORPORATION) 12 March 1996 (1996-03-12)<br>claims 1-2, paragraphs [0002], [0011], [0013], examples | 1-7 |
| A | JP 2000-26818 A (NITTO DENKO CORPORATION) 25 January 2000 (2000-01-25)<br>claims 1, 3-5, paragraphs [0006], [0022]-[0024], [0034], examples | 1-7 |
| A | WO 2017/038180 A1 (SUMITOMO ELECTRIC INDUSTRIES, LTD.) 09 March 2017 (2017-03-09)<br>claims 1, 4, 6, paragraphs [0006], [0008], [0049]-[0053], examples | 1-7 |
| A | JP 11-235794 A (DAICEL CHEM. IND. LTD.) 31 August 1999 (1999-08-31)<br>claims 1, 7-9, paragraphs [0010], [0027], [0030], [0032], examples | 1-7 |

☑ Further documents are listed in the continuation of Box C.    ☑ See patent family annex.

| | |
| --- | --- |
| \*   Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2023/045385** |

### C. DOCUMENTS CONSIDERED TO BE RELEVANT

| Category* | Citation of document, with indication, where appropriate, of the relevant passages | Relevant to claim No. |
|---|---|---|
| A | JP 10-202801 A (IDEMITSU PETROCHEMICAL CO., LTD.) 04 August 1998 (1998-08-04) claims 1, 3, paragraphs [0005], [0016], [0019], [0023], examples | 1-7 |
| A | JP 2015-44888 A (SEKISUI PLASTICS CO., LTD.) 12 March 2015 (2015-03-12) claims 1, 4, 10-12, 15-16, paragraphs [0006], [0013], [0091], examples | 1-7 |

Form PCT/ISA/210 (second sheet) (July 2022)

## INTERNATIONAL SEARCH REPORT
### Information on patent family members

International application No.

**PCT/JP2023/045385**

| Patent document cited in search report | | | Publication date (day/month/year) | Patent family member(s) | Publication date (day/month/year) |
|---|---|---|---|---|---|
| JP | 2007-169421 | A | 05 July 2007 | WO 2007/075771 A1 claims 1-2, 4, 10-11, p. 3, lines 12-18, p. 4, lines 13-24, p. 6, lines 26-31, p. 19, lines 18-25, p. 24, line 1 to p. 26, line 15, p. 27, line 27 to p. 28, line 12, examples<br>EP 1963452 A1<br>CN 101346446 A | |
| JP | 8-67859 | A | 12 March 1996 | (Family: none) | |
| JP | 2000-26818 | A | 25 January 2000 | (Family: none) | |
| WO | 2017/038180 | A1 | 09 March 2017 | US 2017/0306063 A1 claims 1, 4, 6, paragraphs [0006], [0008], [0057]-[0066], examples<br>EP 3342835 A1<br>CN 107075316 A | |
| JP | 11-235794 | A | 31 August 1999 | (Family: none) | |
| JP | 10-202801 | A | 04 August 1998 | (Family: none) | |
| JP | 2015-44888 | A | 12 March 2015 | EP 2799472 A1 claims 1, 3, 11-13, paragraphs [0008], [0016], [0136], examples<br>CN 104039877 A<br>KR 10-2014-0103941 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1077463 A
- JP 2018138649 A
- JP 2019534059 A